# EUROPEAN PATENT SPECIFICATION

(11) **EP 2 876 026 B1**
(45) Date of publication and mention of the grant of the patent: **13.07.2022**
(21) Application number: 13787136.4
(22) Date of filing: 07.05.2013
(51) Int. Cl.: B62H 3/02, B62H 5/00

(54) **SECURE PARKING DEVICE FOR BICYCLES**
SICHERE PARKVORRICHTUNG FÜR FAHRRÄDER
DISPOSITIF DE STATIONNEMENT SÛR POUR BICYCLETTES

(30) Priority: 07.05.2012 ES 201200450; 04.09.2012 ES 201200817
(43) Date of publication of application: 27.05.2015
(73) Proprietor: Reka All Wear S.L., 08022 Barcelona (ES)
(72) Inventor: RECASENS ALSINA, Marta, E-08022 Barcelona (ES)
(74) Representative: ZBM Patents - Zea, Barlocci & Markvardsen
(86) International application number: PCT/ES2013/070282
(87) International publication number: WO 2013/167778

(56) References cited:
- EP-A2- 1 712 456
- DE-A1- 3 238 404
- DE-U1- 9 309 642
- DE-U1- 9 309 642
- ES-T3- 2 337 717
- ES-U- 1 050 750
- FR-A1- 2 746 360
- DATABASE WPI Derwent Publications Ltd., London, GB; AN 1984-102331, XP055176781 & DE 32 38 404 A1 (OSTHUES & BAHLMANN) 19 April 1984
- DATABASE WPI Derwent Publications Ltd., London, GB; AN 2009-B53561, XP055176783 & JP 31 38998U U (FUJISAWA H) 31 January 2008

## Description

### Subject matter of the Invention

This patent relates to a secure parking device for bicycles, thanks to its structure and conformation, it becomes a unique system on the market to park bicycles safely, significantly improving the state of the art.

Specifically, this parking aims to hold the bicycles fixed and immovable at a parking point, anchoring the bicycle at three points of its structure, which provides greater security against thefts and substractions of bicycles.

### Background of the Invention and state of the art

Are notoriously known various systems aimed at preventing the theft of two-wheelers and bicycles especially in the urban environment. One of the most frequently used are U-locks, cables or simple chains associated to a padlock. All these systems are used to attach one of the wheels or the frame of the bicycle to a fixed anchor point, but the fact is that the locks that are associated to them are easy to open and does not guarantee at all the bicycle safety, especially taking into account that in most cases the parkings are located outdoor.

To this must be added the fact that it is imposing the need to increase the safety of the rider with the use of a helmet, which is to be added a new item to protect from subtractions. Unlike helmets for motorcyclists comprising in their structure a lower extension surrounding chin of the motorist that allows passing a cable or similar to hold it at the same motorcycle the helmets for cyclists tend to be smaller and to protect the top of the head, which have no point to allow a fastener as described.

Therefore, cyclist and particularly the cyclist moving in the urban environment must protect and ensure both the bicycle and the helmet.

The most common system in cities are parking structures or metal chassis in an inverted U shape with two ends anchored in the ground and the chains or cables aforesaid fastened locks and which are associated to a portion of the bicycle.

Meanwhile, public or private companies hire bicycles using other systems that introduce passwords using smart cards to open a safety lock that secures the bicycle to a clamping bar.

In industrial property information there are many patents that develop bicycle parking systems, as is the case of the utility model U200400164 that proposes a support for public bicycle parking based on the structure or U chassis already mentioned that it adds a central pillar with transverse holes for fixing the bottom of the frame of the bicycle by a single closure element and lateral bars for introducing them across the front and rear wheels of the bicycle.

Also the utility model U201131214 develops a support for bicycle parking of the type comprising a guide rail set provided with a channel along which it accommodates a support for the two wheels of a bicycle and a second guide to support the front portion of the front wheel of the bicycle, adding to this second guide two movable safety bindings for holding and retaining the two wheels of a bicycle.

These and other security systems for parking bicycles are perfectly valid in operation but have the disadvantage of holding the bicycle maximum on two points of its structure when in fact the bicycles are made up of several parts - wheels, frame, seat and handlebars - easily removable and left unprotected. The result is that the user is forced to use more than one cable or chain with padlock to hold the bicycle in several points, which means more spending and to carry a greater number of security features. And in any case the helmet is beyond any of the above options.

For example, the document DE 3238404, which shows the preamble of claim 1, presents a device for storing a two-wheeled vehicle, in particular a bicycle that *"consists essentially of a vertical column which is anchored in the floor and on which one or more brackets for suspending a bicycle from or leaning a bicycle against are provided. The bracket can be constructed as a horizontally extending spar and be fixed to the column at such a height that the bicycle to be stored can be suspended from it by slightly raising the rear part below the saddle. To protect against the elements, a protective roof for the saddle is fixed on the column above the bracket or brackets, which roof can be vertically adjusted to permit more easy handling and to provide an extremely effective protection."* The patent EP 1712456 develops an Anti-theft device for bicycle that *"has a vertical rack (1) provided with an inverse U-shaped metallic part (2) in a perpendicular plane. The metallic part is fixed at two points (3) in an inclined position from top to bottom and from the front towards the rear of a bicycle. The bicycle is positioned, such that the rear of a saddle is in contact with the metallic part. A fastening device (4) e.g. padlock, assembles the front wheel and a bicycle frame to one of the vertical bars (5) integrated to the rack."* The document FR 2746360 develops an Anti-theft support for bicycle that *"comprises a convex hood (1) rigidly fixed to the top part of a tube (2) sliding on the ground tube (3). The hood covers and protects the cycle saddle when the tube and convex piece are lowered by the user. Displacement of the tube relative to the saddle tube can be locked in a given position by a locking screw (8). Displacement of the tube is assisted by a gas actuator which supports and holds the tube in the top position when the cycle support is not in use. A mask (5) which slides along the tub is drilled with a hole allowing passage of a padlock for locking movement of the locking screw."* And the document DE 9309642 develop a support for cycles based on two tubes interrelated, a first anchored and fixed pipe into the ground and a second tube inserted in the first and has upward and downward mobility, with a guide stop which limits the movement of the movable tube.

None of them proposes a solution to also save the cyclist helmet while cycling is ensured.

This conformation is perfectly functional but although the device adapts to the height of any bicycle to have height adjusters, metal rods mentioned are immovable and limit the size of the bicycle to hold, not being suitable, for example, for children's bicycles. Furthermore, being a divergent supported at two metal rods fixed on the floor it is being dimensionally large, also limited to a single bicycle fastening device. One solution to this problem is undoubtedly the installation of several devices consecutive parking, but the result is the occupation of excessive physical space.

The movement of vertical positioning of the upper case of the device it requires to manually lift the parking, this being a problem for the universality of the device by the weight thereof.

To solve these problems it has been designed a second embodiment, which is not claimed, of the bicycle parking devise introducing means for regulation assisted with height adjustment with a vertical layout which occupies a smaller space, parking preferably being fixed nature but with the particularity of being able to adjust with a mobile format.

In this second embodiment, which is not claimed, the main support frame or chassis is emerging as one central support column and support from which emerges different elements intended to restrain effectively the various parts of the bicycle.

In its preferred conformation, which is not claimed, said column is fixed to a bolted-down basis. So that all the bicycles can be anchored to the system, the column is provided with: a) a mechanism (pneumatic, hydraulic, mechanical or electrical), through a lifting lever which allows modifying its height with an inner piston displacement, or b) of a grill to which the bicycle can be hung and fixed so that the user can proceed to comfortably anchorthe portions of the same. This grill is optionally linked to other parts of the parking device or external support points.

This main column presents some anchoring points or areas for the bicycle, in a preferred embodiment, these are specified in a holding means for holding or fastening the respective front and rear wheels and the frame of the bicycle, with the cable type, chain, plates or similar and being associated with locking systems, preferably in a cylinder anchored on either side of the central column or case, having each of them of a corresponding extension mechanism that runs internally, culminating in a regulator related to the fastening means before mentioned. The fastening means are suitable to incorporate a burglar alarm and burglar protection.

At the upper end of the column also sits, immovably, another anchoring point materialized in a container or case designed mainly to contain the bicycle seat and user's helmet. The container or case is fitted with a locking mechanism, preferably of the electromagnet type. Such a container or case adopts a closed or partially open conformation, waterproofed totally or partially and its outer structure is suitable as graphics support, including for advertising purposes. The shape of the case is variable, intended, in any case, to protect the seat and the rider's helmet.

The locking mechanism of the clamping or fastening means such as cables or similar that retain the front and rear wheels and the frame of the bicycle is linked to the central column and maintain a fixed distance from the case to coordinate with the lock mechanism of it. This mechanism can also be linked to the case, being the preferred presentation where it is linked to the central column.

This second embodiment of the bicycle parking, which is not claimed, also incorporates means for connecting various units of parking in series, which, thanks this vertical form, occupy a smaller physical space. These means may be located in sight, i.e. as part of the parking structure visible or hidden, located below ground level in which the parking stands. In the first case they are specified in a bar arranged in a horizontal arrangement that intersects at any point of the non-extensible central column area.

Another innovative aspect, which is not claimed, is the parking incorporating recharging terminals for electric bicycles, which can be placed anywhere in either the parking structure and preferably inside the container or case.

The central column has, optionally, a hollow interior space with a slot opening, provided with closing or not and where a tarpaulin or the like is placed, waterproof and extensible suitable to cover the bicycle in case of inclement weather.

The holding or fastening means for clasping the wheels and part of the system that arise from cylinders placed preferably on the sides of the center column but equally functional that if they are linked directly to the central column or to an external device. In fact, in a simplified embodiment, the lateral cylinders disappear and the fastening means, such chain, cable, etc. arise directly from the central column or case.

In spite of the incorporation of means to pair and connect several parking devices in series, as it has been referenced, the described embodiments are designed to accept and restrain bicycles unitary, i.e. a bicycle on each device, which still poses the need for better use of space in a preferably urban environment.

From the second embodiment, which is not claimed, based on a main column, a first enhancement arises allowing to park and securely hold two bicycles in "tandem" format. The center column remains the basis of the element that articulates the parking device, dimensionally shaped to accommodate two bicycles placed in parallel, leaving the column in an intermediate position. In this conformation, the already referenced cylinders become arms of geometric shape, with variable length and line against the design requirements and as associated with the fastening or attachment means such as cable or similar which eventually will surround the different parts of the bicycle to be hold.

In this upper end of the column they are also settled two containers or cases for hosting mainly bicycle seat and user's helmet, leaving the two at the same level or, if appropriate, at different levels. This container or case keeps the characteristics already referenced above, formed based on two hinged halves closed or partially open with the appropriate closure means or with the particularity to form with only one half, either the top or the bottom and a cap of support or closure.

Several Parking devices with "tandem" format or individual format are connected together to a control terminal formed as a turret and responsible for managing all operational aspects of the system (user interface, interface with the control center interface with maintenance ...) which will allow the access to the control system to the users, with the opening and closing of the closure device among other functions, including energy recharge is done by solar energy through solar panels conveniently located in the same turret or in the center column of each unit and / or "tandem".

For practical purposes, it is expected that various parts of the parking device are removable for both repairs damage or faults or, if necessary, to facilitate the manufacture of parts thereof via various suppliers to provide improved costs production.

It is anticipated as well, an access point to the internal control mechanisms of the parking device to enable providing onsite maintenance and repairs.

### Description of the drawings

For a better understanding of what is described herein, some drawings are attached, which must be analyzed and considered merely as an example but not as a limiting or restricting condition.
Figure 1. Front view of the parking device in a first embodiment
Figure 2. Side view of the parking device in a first embodiment
Figure 3. Plan view of the parking device in a first embodiment
Figure 4. Detail View of the exterior of the container or open case
Figure 5. Detail view of the inside of the container or open case
Figure 6.- Front view of the parking device in a second embodiment, which is not claimed
Figure 7. Plan view of the central column, the screw base and parallel cylinders in a second embodiment, which is not claimed
Figure 8. Front view of the parking device to detail bar connecting multiple units in a second embodiment parking, which is not claimed
Figure 9. Front view of the parking device "tandem" format
Figure 10. Front view of the parking device "tandem" format
Figure 11. Plan view of the parking device "tandem" format
Figure 12. View of a practical application of the parking device "tandem" format

### Description of a preferred embodiment

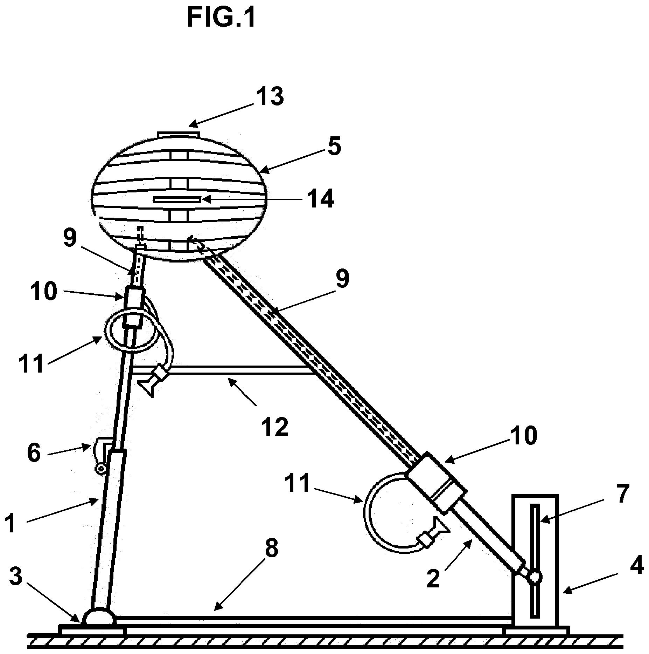

In Figures 1, 2, 3, 4 and 5 a first embodiment of locking device bicycle parking is shown, comprised as shown in Figure 1, by a preferably metallic and substantially triangular structure or chassis comprising two longitudinal bars (1) and (2) anchored in their respective supports or bases (3) and (4) fixed to the floor and converge at their upper end in a body as a container or case (5).

The first bar (1) is disposed in an minimally oblique position while the second bar (2) shows a more steeply inclined position, having two separate bars both height adjustment mechanisms, which in case of the first bar (1) it is basically a telescopic adjustment mechanism equipped with an external controller (6) while the second bar (2) has a guide (7) regulating integrated into the base (4) fixed to the ground height. Both bars (1) and (2) are linked by two arranged crossbars horizontally, the first being a measurement bar (8) located at the bottom, almost at ground level, and the second a stiffening bar (12) located halfway up.

The bars (1) and (2) comprises means for holding different parts of the bicycle. Both bars (1) and (2) have a clamping mechanism (9) running internally and culminating in a controller extension (10) with fastening means or tie (11) such cable to hold the front wheel bicycle in the case of the bar (2) and the rear wheel and the bicycle frame if the bar (1). These regulators (10) are located at different levels to suit the position of the parts of the bike to hold.

In the same Figure 1 the converging path of the bars (1) and (2) described is shown, that at their point of closest approach are crimped into one body as a container or case (5) substantially oval in this example, formed two symmetrical parts joined by a hinge (13) and provided with a handle (14) and a mechanism for manual or digital close. The opening of the container or case (5) allows closes around bicycle saddle, also keeping inside the hull of the cyclist.

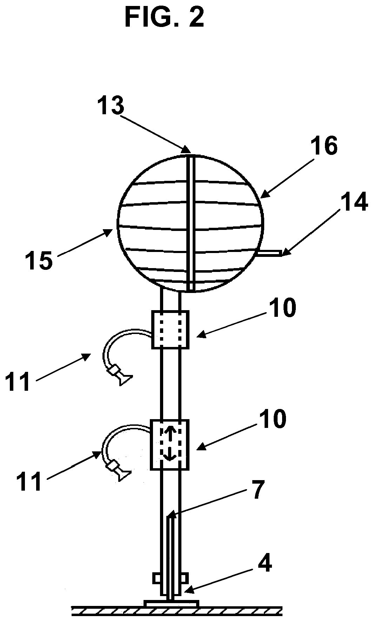

Figure 2 shows a side view of the device, with the oval shape container or case (5) with hinge (13) linking the two halves (15) and (16) of said container or case (5) subject in turn to bar (1) and being visible at different heights, regulators extension (10) with the respective fasteners or fastening (11) associated to hold the front wheel (the lower regulator) and the wheel and rear box (upper unit).

Figure 2 also clearly shows the height adjustment guide (7) integrated in the support base of the bar (2) sharply more oblique.

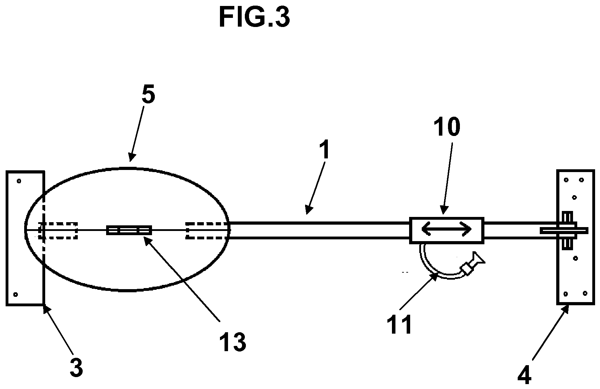

Figure 3 shows a view of the device, again showing the oval shape of the container or case (5) and the arrangement of the two support bases (3) and (4) of the bars attached to the floor.

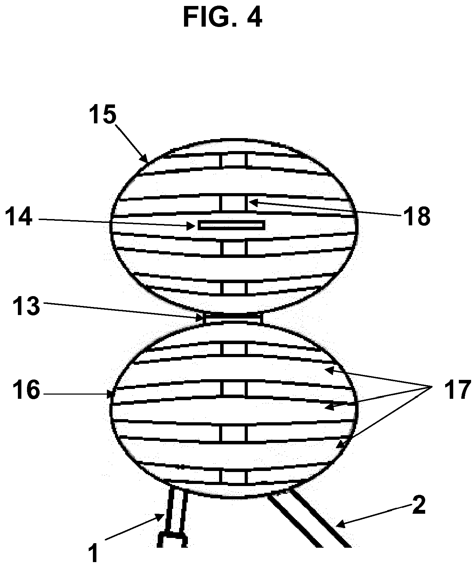

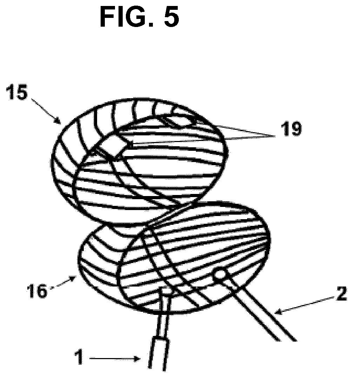

Figures 4 and 5 shown the container or case (5), on the outside (Figure 4) and inside part (Figure 5), consisting of two symmetrical halves (15) and (16) linked by a hinge (13) allowing its opening and articulating with a handle (14) for handling. The case or container housing (5) may be designed as a closed or partially open and equally shell can be wholly or partially impermeable. In this embodiment shown in the figures, said casing is formed by a lattice of strips (17) horizontal and an inner transverse strip (18) of reinforcement and includes flanges (19) of limitation for fixing anchors of rods (1) and (2).

How to use this device secure bicycle parking is easy and intuitive. As noted, just bring the bike to the device, check if the height is adjusted correctly or, if necessary, adjust the height with the mechanisms described. Then you just have to tie the front wheel with fastening means or tether like cable to the bar that corresponds, tie the rear wheel and frame with the cable from another bar, open the container or upper case, surround the saddle with two halves of the container or case and close it.

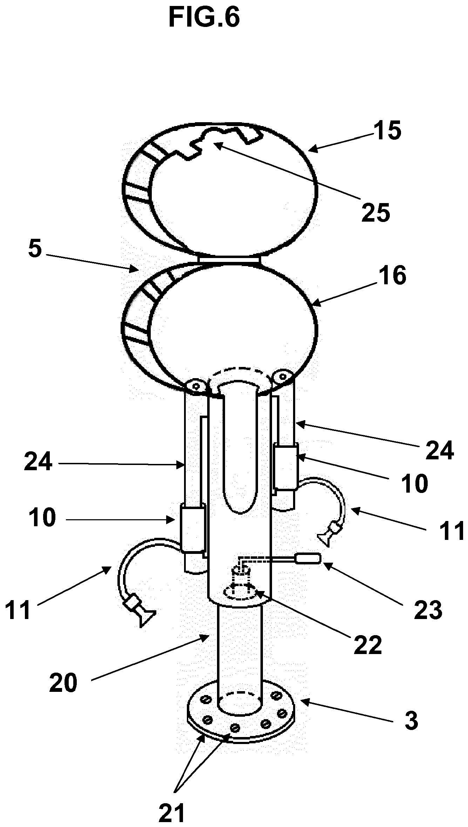

Figures 6, 7 and 8 show a second embodiment of the secure parking bicycle device, which is not claimed, with assisted height adjustable in its immovable version, as shown in Figure 6, consisting of a main structure embodied in a central column (20) for support and bracket from which emerge the different elements to hold the various parts of the bicycle.

The center column (20) is fixed to a base (3) fastened to the floor with bolts elements (21) or other means of stable fixation, being of pneumatic, hydraulic, mechanical or electrical nature, with an inner piston (22 ) activated by a lever (23) or outer drive. Said central column (20) incorporates locking systems, preferably in cylinder (24) format anchored, as shown in these figures, on both sides of the central column (20) or the hood (5) and which have of two separate regulatory mechanisms extension (10) associated with a clamp or tie (11), cable type or the like to retain part of the bicycle as appropriate, in particular the front and rear wheels and the frame of the bicycle. These locking systems optionally adopt other conformations, maintaining the same function as described.

In the same figure 6 shown the second anchor point, embodied in a container or case (5) which is immovably fixed to the upper end of the central column (20). Said box is formed by two symmetrical parts (15) (16) articulated to have a closing point with a mechanism (25), preferably type electromagnet, located either in the upper part (16) in the bottom (15) or both together. Said hood may also have an opening panel located at any point along its perimeter.

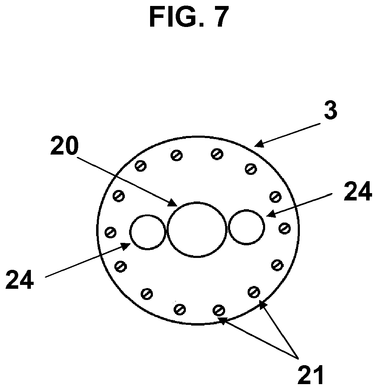

Figure 7 shows a view in plan of the arrangement of the central column (20) in a base (3) secured to the floor with screws (21) and the cylinders (24) parallel to said column (20), it being evident the substantially vertical formation of parking and small physical space it takes.

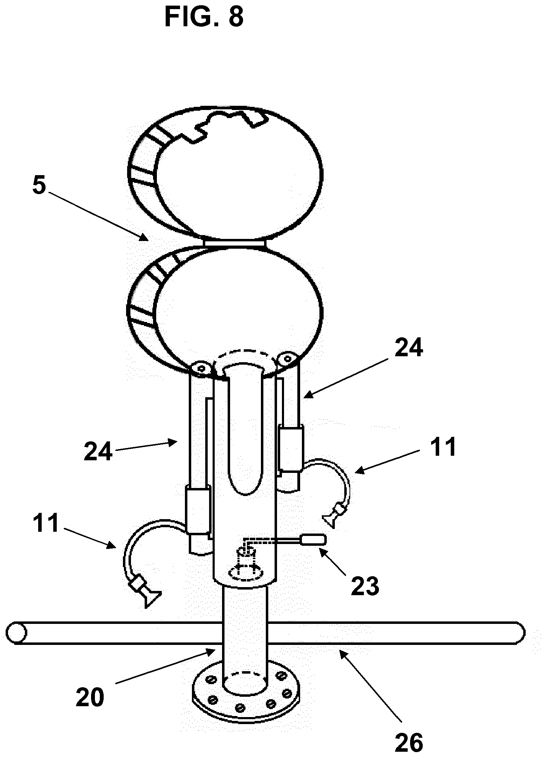

Figure 8 shows an embodiment, which is not claimed, which includes a horizontal bar (26) crosslinked in the bottom of the center column (20) and allowing connection of various points in series parking. This bar (26) is located at any point on the non-stretchable zone of the center column (20) in order not to vary the distance between the different attachment points of the bicycle.

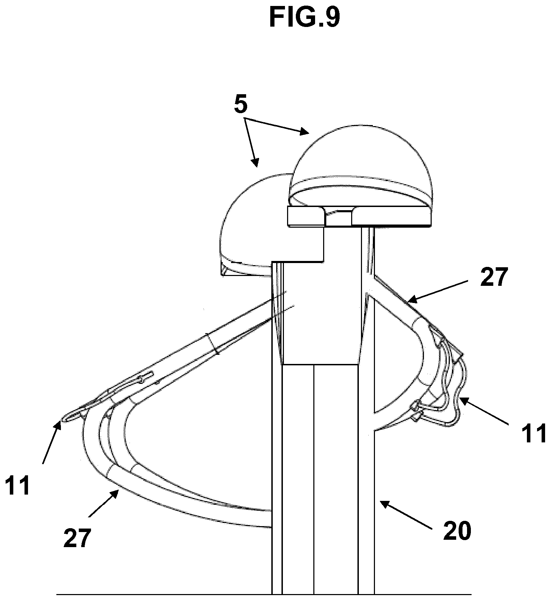

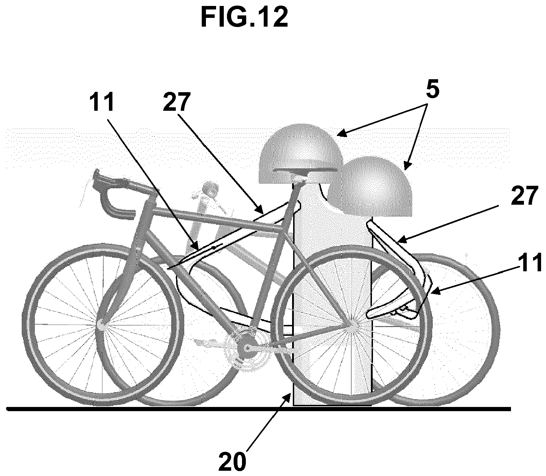

Figures 9, 10, 11 and 12 show the device secure parking for bicycles in "tandem" format, with the central column (20) conveniently sized to accommodate two bicycles placed in parallel, leaving said central column (20) located between the two bikes, as shown in Figure 12.

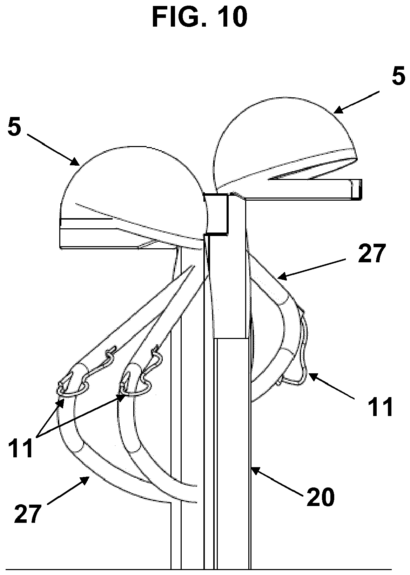

Figures 9 and 10 show how the cylinders in the second embodiment, which is not claimed, referenced become arms (27) in length, geometric conformation and layout variable that will accommodate different needs and designs that do not alter functionality since, in any case, said arms (27) are associated and serve as anchors for tether or fastening means (11) for cable or similar which are finally surround the parts of the bicycle to fasten. Said arms (27) are suitably anchored in the center column (20) and are placed in pairs of two on both sides of said central column (20), so that it has two arms (27) to secure each bike as shown in Figure 12. in view of these figures it is seen that the shape and length of the pairs of arms (27) differs from one another, corresponding to the dimensions of the bicycle and in customer point that is located approximately every bicycle wheel to hold.

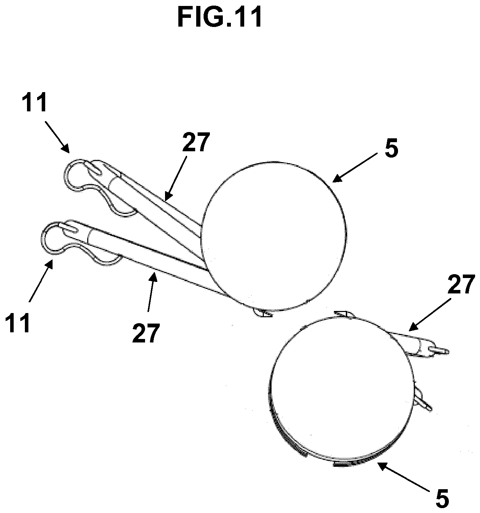

These figures and also in Figure 11 shown the containers or cases (5) seated on top of the central column (20) that, in these figures, are formed as a unit open at its lower end to allow engagement of bicycle saddle.

Based on this description are clear advantages of the device secure parking for bicycles as claimed.

For its conformation, it easily integrates into any environment; it is a module adaptable to any bicycle with its height adjustment mechanism; It is robust and resistant to both everyday use and the possible weather to stand outdoor elements.

By its use, perfectly responds to the planned objective: to achieve maximum security in a bicycle parking point, for which has three anchor points and subject to the four essential parts of the bike: front wheel, rear wheel and box saddle, adding cyclist helmet.

In the first embodiment, is also very easy to use because you can just check that the height of the bars is correct for the bike and, if necessary, adjust this height. Then you just have to ensure each of the parties mentioned in the corresponding anchor point.

The very robust structure and diversity of anchor points make the subtraction of the complete bike requires time and skill to break each of the anchors. And likewise, being each of the parts of the bike attached and secured, the subtraction of any of these parts is also complicated and costly.

In a second embodiment, which is not claimed, with the central column as the axis of the system, the practical application of this device bicycle parking is also simple and quick with its system of regulation of assisted height. You only need to bring the bike to the central column, regulate and correct their height by the corresponding lever and adjust the cable or tether with relevant regulators, wrapping one front wheel and the other rear wheel and bicycle frame. The last step is to accommodate the seat inside the container or box, saving, if the opportunity arises, the helmet.

The various means for adjusting the height of both the central column and the means of fastening or tether of the lateral cylinders allow that fits any bike: urban, mountain, children, etc

Thanks to its shape around a central column, substantially reduces its size, allowing a better arrangement in any public or private environment

Incorporating means for connecting various units of parking bikes in series is a valuable contribution to the commercial exploitation of the service, to save space, in fact, equivalent to the size of the bike itself. Furthermore, they can be combined spatially distributed and the most convenient to suit the environment in which are to be placed form.

The assembly and installation bicycle parking mobile nature to provide services in specific events such as sporting events, festivals and concerts are also possible, facilitating the mobility of workers and the fluidity of transport. In this case, the connection means between different parking units would include bar in a modular format as described. It's also a parking does not forget the ecological bikes that run on electricity, incorporating charging points for them, so that the user is sure to have the bike always charged, using the time to rest to recharge the batteries. And of course, the aspect to incorporate at least a case to protect the saddle and helmet is maintained, in this instance related to the central column. This is an aspect to highlight as it provides a real solution and practice for the rider to wear a helmet, contributing to their personal safety. In his "tandem" version, improved bicycle parking device is evident, in both space reduction involved and the aesthetics of the whole, keeping the features and functionality of designs and previous models.

It is not considered necessary to make this description any longer for any expert in the matter to understand the scope of the invention and the advantages deriving from it. The materials, shape, size and arrangement of the elements may be changed, provided this does not mean an alteration in the scope of the invention.

## Claims

1. Secure parking device for bicycles, the secure parking device including:
- a support frame structure, preferably made of metal,
- at least one container housing (5) or case for a bicycle seat, said container housing or case being a closed, or partially open, wholly or partially waterproof shell, and
- holding and fastening means (11) for securing different parts of a bicycle,
**characterized in that** the support frame structure is triangular and comprises a first longitudinal bar (1) and a second longitudinal bar (2) anchored at respective supports (3) or bases (4) configured to be fixed to the ground and converging at their upper end in the container housing or case (5), the first longitudinal bar being disposed in a minimally oblique arrangement and the second longitudinal bar being disposed in a more oblique arrangement than the first longitudinal bar, said first longitudinal bar (1) and said second longitudinal bar (2) having height regulators (10) and the holding and fastening means (11).

2. Secure parking device for bicycles according to claim 1, **characterized in that** the first longitudinal bar (1) is telescopic and has an extension regulator (6) while the second longitudinal bar (2) has a guide (7) for height adjustment integrated in the support or base.

3. Secure parking device for bicycles, according to claim 1 or 2, **characterized in that** the first longitudinal bar (1) and the second longitudinal bar (2) are linked by a first crossbar and a second crossbar arranged horizontally, the first crossbar being a measurement bar (8) placed in a lower part, almost at ground level, and the second crossbar being a stiffening bar (12) located halfway up.

4. Secure parking device for bicycles, according to claim 1, **characterized in that** the holding and fastening means (11) are associated with a clamping mechanism (9) running internally in the first longitudinal bar (1) and the second longitudinal bar (2) that each ends in an extension regulator (10) linked to said holding and fastening means, the holding and fastening means (11) of the first longitudinal bar (1) being suitable to be enshrined in a rear wheel of a bicycle and the holding and fastening means (11) of the second longitudinal bar (2) being suitable to be enshrined in a front wheel of the bicycle, these extension regulators (10) being located at different levels

5. Secure parking device for bicycles, according to any of the preceding claims , **characterized in that** the container housing or case consists of two symmetrical parts (15, 16) joined by a hinge (13) and provided with a handle 14) and a mechanism for manual or digital closing said container housing or case.

6. Secure parking device for bicycles, according to any of the preceding claims, **characterized in that** the container housing or case is formed by a network of horizontal strips (17) and an inner transverse strip of reinforcement and includes limitation flanges for fixing anchors of the first longitudinal bar (1) and the second longitudinal bar (2).

7. Secure parking device for bicycles, according to any of the preceding claims, **characterized in that** the holding and fastening means (11) incorporate an alarm device.

## Patentansprüche

1. Sichere Abstellvorrichtung für Fahrräder, wobei die sichere Abstellvorrichtung Folgendes umfasst:
- eine Stützrahmenstruktur, vorzugsweise hergestellt aus Metall,
- mindestens ein Behältergehäuse (5) oder Behälterkasten für einen Fahrradsitz, wobei das Behältergehäuse oder der Behälterkasten eine geschlossene, oder teilweise offene, ganz oder teilweise wasserdichte Schale ist, und
- Mittel (11) zur Halterung und zur Befestigung, um verschiedene Teile eines Fahrrads festzumachen,
**dadurch gekennzeichnet, dass** die Stützrahmenstruktur dreieckig ist und eine erste Längsstange (1) und eine zweite Längsstange (2) umfasst, die in ihren jeweiligen Trägern (3) oder Basen (4) verankert sind und konfiguriert sind, um am Boden befestigt zu werden und an ihrem oberen Ende in dem Behältergehäuse oder dem Behälterkasten (5) konvergieren, wobei sich die erste Längsstange in einer minimal schrägen Anordnung befindet und die zweite Längsstange in einer schrägeren Anordnung als die erste Längsstange befindet, wobei die erste Längsstange (1) und die zweite Längsstange (2) Höhenregler (10) und die Mittel (11) zur Halterung und Befestigung aufweisen.

2. Sichere Abstellvorrichtung für Fahrräder nach Anspruch 1, **dadurch gekennzeichnet, dass** die erste Längsstange (1) teleskopisch ist und einen Verlängerungsregler (6) hat, während die zweite Längsstange (2) eine Führung (7) zur Höheneinstellung aufweist, die in dem Träger oder in der Basis integriert ist.

3. Sichere Abstellvorrichtung für Fahrräder, nach Anspruch 1 oder 2, **dadurch gekennzeichnet, dass** die erste Längsstange (1) und die zweite Längsstange (2) durch eine erste Querstange und zweite Querstange, die horizontal angeordnet sind, verbunden sind, wobei die erste Querstange eine im unteren Teil, fast auf Bodenhöhe, angeordnete Messstange (8) ist und die zweite Querstange eine auf halber Höhe angeordnete Versteifungsstange (12) ist.

4. Sichere Abstellvorrichtung für Fahrräder, nach Anspruch 1, **dadurch gekennzeichnet, dass** die Mittel (11) zur Halterung und zur Befestigung einem Klemmmechanismus (9) zugeordnet sind, der intern in der ersten Längsstange (1) und der zweiten Längsstange (2) verläuft, die jeweils in einer Verlängerungsregler (10) enden, der mit den Mitteln zur Halterung und zur Befestigung verbunden ist, wobei das Mittel (11) zur Halterung und zur Befestigung der ersten Längsstange (1) geeignet ist, in einem Hinterrad eines Fahrrads verankert zu werden und das Mittel (11) zur Halterung und zur Befestigung der zweiten Längsstange (2) geeignet ist, in einem Vorderrad des Fahrrads verankert zu werden, wobei sich diese Verlängerungsregler (10) auf verschiedenen Ebenen befinden.

5. Sichere Abstellvorrichtung für Fahrräder, nach einem der vorhergehenden Ansprüche, **dadurch gekennzeichnet, dass** das Behältergehäuse oder der Behälterkasten aus zwei symmetrischen Teilen (15,16), die durch ein Scharnier (13) verbunden und mit einem Griff (14) versehen sind, und einem Mechanismus zum manuellen oder digitalen Schließen des Behältergehäuses oder Behälterkastens besteht.

6. Sichere Abstellvorrichtung für Fahrräder, nach einem der vorhergehenden Ansprüche, **dadurch gekennzeichnet, dass** das Behältergehäuse oder der Behälterkasten durch ein Netzwerk aus horizontalen Streifen (17) und einem inneren Verstärkungsquerstreifen gebildet ist und Begrenzungsflanschen zur Befestigung von Ankern der ersten Längsstange (1) und der zweiten Längsstange (2) umfasst.

7. Sichere Abstellvorrichtung für Fahrräder, nach einem der vorhergehenden Ansprüche, **dadurch gekennzeichnet, dass** die Mittel (11) zur Halterung und zur Befestigung eine Alarmvorrichtung enthalten.

## Revendications

1. Dispositif de stationnement sécurisé pour vélos, le dispositif de stationnement sécurisé comprenant :
- une structure de châssis de support, de préférence faite en métal,
- au moins un boîtier (5) ou caisse de logement pour un siège de vélo, ledit boîtier ou ladite caisse de logement étant une coque fermée, ou partiellement ouverte, totalement ou partiellement étanche, et
- des moyens de soutien et de fixation (11) pour assujettir de différentes parties d'un vélo,
**caractérisé en ce que** la structure de châssis de support est triangulaire et comprend une première barre longitudinale (1) et une seconde barre longitudinale (2) ancrées dans de respectifs supports (3) ou bases (4) configuré(e)s pour être fixé(e)s au sol et convergeant à leur extrémité supérieure dans le boîtier ou caisse (5) de logement, la première barre longitudinale étant disposée dans un agencement minimalement oblique et la seconde barre longitudinale étant disposée dans un agencement plus oblique que la première barre longitudinale, ladite première barre longitudinale (1) et ladite seconde barre longitudinale (2) ayant des mécanismes de réglage de la hauteur (10) et les moyens de soutien et de fixation (11).

2. Dispositif de stationnement sécurisé pour vélos selon la revendication 1, **caractérisé en ce que** la première barre longitudinale (1) est télescopique et a un mécanisme de réglage de l'extension (6) tandis que la seconde barre longitudinale (2) a un guide (7) pour le réglage en hauteur intégré dans le support ou base.

3. Dispositif de stationnement sécurisé pour vélos, selon la revendication 1 ou 2, **caractérisé en ce que** la première barre longitudinale (1) et la seconde barre longitudinale (2) sont liées par une première barre transversale et une seconde barre transversale horizontalement disposées, la première barre transversale étant une barre de mesure (8) placée dans une partie inférieure, presque au niveau du sol, et la seconde barre transversale étant une barre de raidissement (12) située à mi-hauteur.

4. Dispositif de stationnement sécurisé pour vélos, selon la revendication 1, **caractérisé en ce que** les moyens de soutien et de fixation (11) sont associés à un mécanisme de serrage (9) passant intérieurement par la première barre longitudinale (1) et la seconde barre longitudinale (2) qui se terminent, chacune d'elles, par un mécanisme de réglage de l'extension (10) relié auxdits moyens de soutien et de fixation, le moyen de soutien et de fixation (11) de la première barre longitudinale (1) étant apte à être enchâssé dans une roue arrière d'un vélo et le moyen de soutien et de fixation (11) de la seconde barre longitudinale (2) étant apte à être enchâssé dans une roue avant du vélo, ces mécanismes de réglage de l'extension (10) étant situés à des niveaux différents.

5. Dispositif de stationnement sécurisé pour vélos, selon l'une quelconque des revendications précédentes, **caractérisé en ce que** le boîtier ou la caisse de logement est constitué de deux parties symétriques (15, 16) réunies par une charnière (13) et munies d'une poignée (14) et un mécanisme pour la fermeture manuelle ou numérique dudit boîtier ou de ladite caisse de logement.

6. Dispositif de stationnement sécurisé pour vélos, selon l'une quelconque des revendications précédentes, **caractérisé en ce que** le boîtier ou la caisse de logement est formé(e) par un réseau de bandes horizontales (17) et une bande transversale intérieure de renfort et comprend des brides de limitation pour la fixation d'ancres de la première barre longitudinale (1) et de la seconde barre longitudinale (2).

7. Dispositif de stationnement sécurisé pour vélos, selon l'une quelconque des revendications précédentes, **caractérisé en ce que** les moyens de soutien et de fixation (11) contiennent un dispositif d'alarme.
